# EUROPÄISCHE PATENTSCHRIFT

(11) **EP 1 217 084 B1**
(45) Veröffentlichungstag und Bekanntmachung des Hinweises auf die Patenterteilung: **27.04.2005**
(21) Anmeldenummer: 01126071.8
(22) Anmeldetag: 02.11.2001
(51) Int. Cl.: C22C 1/02, C22B 21/06, C22B 9/02, C22B 9/10

(54) **Vorrichtung zur Filtration von und Zugabe von Kornfeinungsmittel zu Metallschmelzen**
Apparatus for the filtration and addition of grain refining agent to melts
Appareil pour le filtration et l'addition d'agents à affinages structural de bains de metal en fusion

(30) Priorität: 09.11.2000 DE 10055523
(43) Veröffentlichungstag der Anmeldung: 26.06.2002
(73) Patentinhaber: Hydro Aluminium Deutschland GmbH, 51149 Köln (DE)
(72) Erfinder: Schneider, Wolfgang, Dipl.-Ing., 53757 St. Augustin (DE); Krug, Hans-Peter, Dipl.-Ing., 53359 Rheinbach-Flerzheim (DE); Towsey, Nick, 53125 Bonn (DE)
(74) Vertreter: Schüll, Gottfried, Dipl.-Phys.

(56) Entgegenhaltungen:
- EP-A- 0 490 371
- PATENT ABSTRACTS OF JAPAN vol. 1995, no. 11, 26. Dezember 1995 (1995-12-26) & JP 07 207357 A (KOBE STEEL LTD), 8. August 1995 (1995-08-08)
- SCHNEIDER, W. (VAW ALUMINIUM) ET AL: "Investigation of the effectiveness of various filter types for the filtration of aluminum melts. I.[Untersuchung der Wirksamkeit verschiedener Filtertypen fur die Filtration von Aluminiumschmelzen. I.]." ALUMINIUM (JAN.-FEB. 1998) 74, (1-2), 40-44, NUMERICAL DATA, GRAPHS, PHOTOMICROGRAPHS, 7 REF. ISSN: 0002-6689, XP002235818
- DEVAUX H ET AL: "FILTRATIONSTECHNIKEN FUER ALUMINIUM-GUSSLEGIERUNGEN" GIESSEREI, GIESSEREI VERLAG. DUSSELDORF, DE, Bd. 78, Nr. 5, 4. März 1991 (1991-03-04), Seiten 141-145, XP000175132 ISSN: 0016-9765
- PATENT ABSTRACTS OF JAPAN vol. 011, no. 123 (M-581), 17. April 1987 (1987-04-17) & JP 61 262446 A (KOBE STEEL LTD), 20. November 1986 (1986-11-20)

## Beschreibung

Die Erfindung betrifft eine Vorrichtung zur Filtration von und Zugabe von Kornfeinungsmaterialien zu Metallschmelzen mit einem ersten Filter und einer Zuführung für ein Kornfeinungsmaterial, wobei der erste Filter ein poröses Filtermedium aufweist.

Es ist aus dem Stand der Technik bekannt, Metallschmelzen, z.B. Schmelzen aus Aluminiumlegierungen, während des Gießens zu filtern. Als Beispiel hierfür wird im weiteren auf den Guß von Aluminiumlegierungen Bezug genommen. Das Filtern von Metallschmelzen ist jedoch beispielsweise auch für Kupfer- und Stahllegierungen bekannt. Beim Aluminiumguß strömt die Metallschmelze aus dem Gießofen über einen Inline-Entgaser und eine Vorrichtung zur Filtration und Zugabe von Kornfeinungsmaterialien zur Gießkokille. Der Inline-Entgaser entfernt in an sich bekannter Art und Weise im wesentlichen gelöste, gasförmige Verunreinigungen aus der Aluminiumschmelze. Hierbei handelt es sich vorwiegend um gelösten Wasserstoff. Nach der Entfernung bzw. Reduktion gelöster Verunreinigungen wird der Aluminiumschmelze im Stand der Technik ein Kornfeinungsmaterial - beispielsweise Aluminium-Titan-Bor-Vorlegierungen - zugeführt. Nach der Zufuhr dieses Kornfeinungsmaterials, welches beim anschließenden Guß zu feineren Korngrößen im erstarrten Material führt, wird beim Stand der Technik die Aluminiumschmelze gefiltert, um ungelöste Verunreinigungen, d.h. feste, nicht in der Schmelze gelöste Partikel, zu entfernen. Bei diesen ungelösten Verunreinigungen handelt es sich beispielsweise um Aluminium-Oxidpartikel, Aluminium-Karbide, Aluminium-Karbonitride etc.. Diese ungelösten Verunreinigungen weisen eine Größe von ungefähr 1 bis 100 µm auf. Im Anschluß an die Filtration strömt die Aluminiumschmelze dann, wie bereits erwähnt, zur Gießkokille und wird dort beispielsweise zu Barren vergossen.

Im Stand der Technik z.B. in der JP 7 207 357 erfolgt die Filtration der Schmelze nach der Zugabe der Kornfeinungsmaterialien, da auch die Kornfeinungsmaterialien ungelöste Verunreinigungen in die Schmelze eintragen. So enthält beispielsweise die als Kornfeinungsmaterial eingesetzte Aluminium-Titan-Bor-Vorlegierung grobe unlösliche Titandiboridpartikel und Oxideinschlüsse, die beim späteren Gußprodukt unerwünscht sind.

Zur Filtration von Aluminiumschmelzen sind unterschiedliche Arten von Filtern bekannt, siehe z.B. Schneider, W.; Krug, H.P.; Keegan, N; "Untersuchung der Wirksamkeit vershiedener Filtertypen für die Filtration von Aluminium-schmelzen". Aluminium, 74, Jahrgang 1998, Seite 40 bis 44. Eine besonders preiswerte und platzsparende Filtration wird durch die Verwendung von sogenannten keramischen Schaumfiltern ermöglicht. Diese keramischen Schaumfilter werden in Plattenform - Dicke ca. 50 mm - verwendet und von der Aluminiumschmelze senkrecht zur Plattenebene durchströmt. Hergestellt werden diese keramischen Schaumfilter durch das Tränken eines offenporigen Polyurethanschaums mit einer wasserbasierten Aluminiumoxidschlemme und Bindemitteln. Dieser getränkte Polyurethanschaum wird anschließend getrocknet und gebrannt, wobei der Polyurethanschaum verbrennt und ein negatives Abbild der Schaumstruktur als Keramikschaum zurückläßt. Die Filtereffektivität von keramischen Schaumfiltern ist bei dem aus dem Stand der Technik bekannten Einsatz mittel bis gut.

Ein weiteres, bekanntes Filtersystem für Aluminiumschmelzen stellen sogenannte Schüttbettfilter dar. Bei einem Schüttbettfilter besteht das Filtermedium aus Aluminium-Oxidgranulat oder -kugeln, die in einer Filterbox als teilweise geschichtete Schüttung von der Aluminiumschmelze durchströmt werden. Werden ausschließlich Schüttbettfilter zur Filtration eingesetzt, so erfordert dies große Filterboxen, die allerdings im Vergleich zur Verwendung von keramischen Schaumfiltern eine deutlich höhere Standzeit aufweisen. Die Filtereffektivität von Schüttbettfiltern ist durchweg als gut zu bezeichnen.

Die aus dem Stand der Technik bekannten einfachen Filtersysteme, wie beispielsweise keramische Schaumfilter, zeichnen sich gegenüber aufwendigeren Filtersystemen, wie beispielsweise Schüttbettfiltern, durch geringere Kosten und einen geringeren Platzaufwand aus. Auf der anderen Seite weisen die aus dem Stand der Technik bekannten aufwendigen Filtersysteme eine höhere Filtereffektivität und höhere Standzeiten auf.

Ausgehend von dem zuvor beschriebenen Stand der Technik liegt der vorliegenden Erfindung die Aufgabe zu Grunde, eine Vorrichtung zur Filtration von und Zugabe von Kornfeinungsmaterialien zu Metallschmelzen anzugeben, die es ermöglicht, mit einfachen Filtersystemen eine hohe Filtereffektivität zu ermöglichen.

Erfindungsgemäß ist die zuvor hergeleitete und aufgezeigte Aufgabe dadurch gelöst, daß die Zuführung für das Kornfeinungsmaterial in Strömungsrichtung hinter dem ersten Filter angeordnet ist und in Strömungsrichtung hinter der Zuführung für das Kornfeinungsmaterial ein zweiter Filter angeordnet ist. Es hat sich überraschenderweise gezeigt, daß die Filtereigenschaften eines Filters, der ein poröses Filtermedium aufweist, für Metallschmelzen so wesentlich durch die vorherige Zugabe von Kornfeinungsmaterialien hin zu niedrigeren Filtereffektivitäten beeinflußt werden, daß die bessere Filtereffektivität des ersten Filters sogar eine Zugabe des Kornfeinungsmaterials mit den hierin enthaltenen ungelösten Verunreinigungen nach dem ersten Filter rechtfertigen kann. Um auch die ungelösten Verunreinigungen, die über das Kornfeinungsmaterial in die Schmelze getragen werden, zu entfernen, ist in Strömungsrichtung hinter der Zuführung für das Kornfeinungsmittel ein zweiter Filter angeordnet.

Es hat sich in Versuchen gezeigt, daß insbesondere Filter die auf der Filtration mittels Kuchenbildung basieren, im Hinblick auf ihre Filtereffektivität empfindlich auf die Zugabe von Kornfeinungsmaterial reagieren. Werden derartige Filter nach der Zugabe des Kornfeinungsmaterials eingesetzt, so wird die Kuchenbildung erschwert oder sogar verhindert, wodurch diese Filter ihre volle Filterwirkung nicht erreichen. Durch die erfindungsgemäße Anordnung des ersten, auf einer Kuchenfiltration basierenden Filters vor der Zuführung des Kornfeinungsmaterials wird die Filtereffektivität dieses Filters deutlich verbessert.

In einem keramischen Schaumfilter ohne die Zugabe von Kornfeinungsmaterial vor dem Filter bilden sich Brücken bestehend aus einer Ansammlung von ungelösten Verunreinigungen. Diese Brücken bewirken eine deutliche Verbesserung der Filtereffektivität der keramischen Schaumfilter. Diese Brückenbildung kann bei der Zugabe von Kornfeinungsmaterial vor dem keramischen Schaumfilter nicht beobachtet werden. Dementsprechend weist der erste Filter der erfindungsgemäßen Vorrichtung vorzugsweise eine Platte aus keramischen Schaum auf.

Es hat sich gezeigt, daß sich nicht über die gesamte Dicke von 50 mm der üblicherweise eingesetzten Platten aus keramischem Schaum die die Filtereffektivität verbessernden Brücken aus ungelösten Verunreinigungen bilden. Im Hinblick auf den Strömungswiderstand weist die Platte aus keramischem Schaum dementsprechend bei einer erfindungsgemäßen Vorrichtung eine Dicke von 5 bis 30 mm - vorzugsweise 10 bis 15 mm - auf.

Alternativ oder kumulativ zu einer Platte aus keramischem Schaum weist der erste Filter vorteilhafterweise zumindest ein Element aus gesintertem Material und/oder ein Element aus einem über CVD (Chemical Vapor Deposition) abgeschiedenen Material auf.

Zur Filtration der festen ungelösten Verunreinigungen eignen sich vorzugsweise poröse Filtermedien. Dementsprechend ist die erfindungsgemäße Vorrichtung vorzugsweise dadurch ausgestaltet, daß auch der zweite Filter ein poröses Filtermedium aufweist.

Zur Filtration der durch das Kornfeinungsmaterial nach dem ersten Filter in die Metallschmelze eingetragenen ungelösten Verunreinigungen eignet sich aufgrund der relativ geringen Last an ungelöste Verunreinigungen als zweiter Filter ein Tiefbettfilter. Dieser Tiefbettfilter kann aufgrund der geringen Verunreinigungslast erheblich geringere Abmessungen aufweisen, als dies üblicherweise bei der alleinigen Verwendung von Tiefbettfilter zur Filtration notwendig ist.

Ein besonders geeigneter Tiefbettfilter zur Filtration von Metallschmelzen ist der sogenannte Schüttbettfilter. Bei einem Schüttbettfilter wird das poröse Material durch eine Schüttung von in der Regel kompakten Filterkugeln und/oder Filtergranulat gebildet.

Gemäß einer weiteren Ausgestaltung sind der erste Filter und/oder der zweite Filter der erfindungsgemäßen Vorrichtung beheizbar. Dies ermöglicht eine Mehrfachverwendung des ersten und/oder zweiten Filters bei aufeinanderfolgenden Chargen.

Neben der Vorrichtung betrifft die Erfindung auch ein Verfahren zur Filtration von und Zugabe von Kornfeinungsmaterialien zu Metallschmelzen bei welchem die Schmelze mit Hilfe eines ersten ein poröses Filtermedium aufweisenden Filters gefiltert wird und der Schmelze ein Kornfeinungsmaterial zugeführt wird. Ein derartiges, aus dem Stand der Technik bekanntes Verfahren wird unter Zugrundelegung der oben aufgezeigten Aufgabe erfindungsgemäß dadurch verbessert, daß das Kornfeinungsmaterial der Schmelze hinter dem ersten Filter zugeführt wird und daß die Schmelze in Strömungsrichtung hinter der Zuführung für das Kornfeinungsmaterial mit Hilfe eines Tiefbettfilters gefiltert wird.

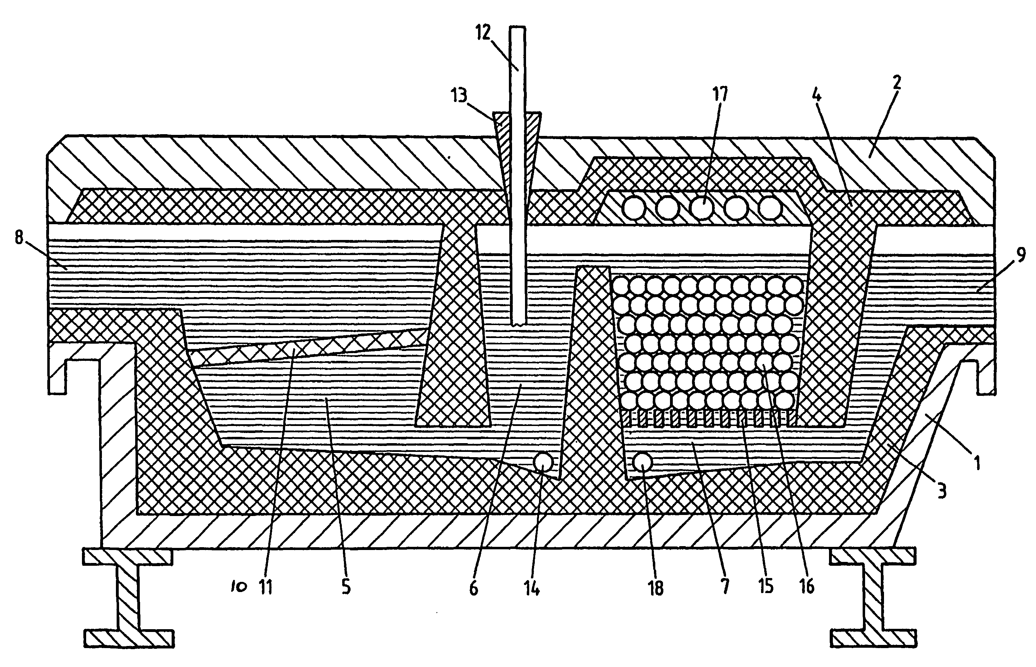

Es gibt nun eine Vielzahl von Möglichkeiten, die erfindungsgemäße Vorrichtung bzw. das erfindungsgemäße Verfahren zur Filtration und Zugabe von Kornfeinungsmaterialien zu Metallschmelzen auszugestalten und weiterzubilden. Hierzu wird beispielsweise verwiesen einerseits auf die dem Patentanspruch 1 nachgeordneten Patentansprüche und andererseits auf die Beschreibung eines Ausführungsbeispiels in Verbindung mit der Zeichnung.

In der Zeichnung zeigt die einzige Figur ein Ausführungsbeispiel einer erfindungsgemäßen Vorrichtung zur Filtration von und Zugabe von Kornfeinungsmaterialien zu Metallschmelzen schematisch im Schnitt.

Das in der einzigen Figur dargestellte Ausführungsbeispiel einer erfindungsgemäßen Vorrichtung weist einen unteren Außenrahmen 1 und einen oberen Außenrahmen 2 auf. Im unteren Außenrahmen 1 sind die Bereiche, durch die beim vorliegenden Ausführungsbeispiel eine Aluminiumschmelze strömt, durch eine thermisch beständige untere Auskleidung 3 definiert, die mit einer thermisch beständigen oberen Auskleidung 4 des oberen Außenrahmens 2 zusammenwirkt.

Die Aluminiumschmelze ist bei dem in der einzigen Figur dargestellten Ausführungsbeispiel waagerecht schraffiert dargestellt. Die untere Auskleidung 3 und die obere Auskleidung 4 definieren in ihrem Zusammenwirken eine erste Filterkammer 5, eine Zugabekammer 6 für das Kornfeinungsmaterial und eine zweite Filterkammer 7 sowie einen Einlaufbereich 8 und einen Auslaufbereich 9.

In der ersten Filterkammer 5 ist als erster Filter eine Platte 11 aus keramischem Schaum angeordnet. Die Platte 11 ist in einem geringen Winkel zur Horizontalen angeordnet, um die Abführung von Gaseinschlüssen zu ermöglichen.

In die Zugabekammer wird von einer nicht im Detail dargestellten Zuführung ein Draht 12, bestehend aus dem Kornfeinungsmaterial, durch eine Zuführöffnung 13 mit definierter Geschwindigkeit zugeführt. Der Draht 12 schmilzt in der Aluminiumschmelze auf, wodurch das Kornfeinungsmaterial in definierter Konzentration in Lösung geht.

Die erste Filterkammer 5 und die Zugabekammer 6 sind mit einem gemeinsamen ersten Ablauf 14 versehen, der die Entleerung der ersten Filterkammer 5 und der Zugabekammer 6 nach der Filtration einer Charge ermöglicht. Üblicherweise wird die Platte 11 aus keramischem Schaum im Stand der Technik nach der Filtration jeder Charge ausgetauscht. Dies ist bei der Verwendung eines keramischem Schaumfilters in einer erfindungsgemäßen Vorrichtung nicht zwangsläufig notwendig. Demzufolge kann auch die erste Filterkammer 5 gemeinsam mit der Zugabekammer 6 beheizt werden, um den Einsatz ein und derselben Platte 11 aus keramischem Schaum für mehrere Chargen zu ermöglichen. In diesem Fall entfällt die Entleerung der ersten Filterkammer 5 und der Zugabekammer 6 nach der Filtration einer Charge. In der zweiten Filterkammer 7 ist auf einem Gitter 15 ein Schüttbettfilter 16, bestehend aus einer Vielzahl von Aluminium-Oxidkugeln angeordnet. Die zweite Filterkammer 7 ist über eine Heizung 17 beheizbar, wodurch das Entleeren der zweiten Filterkammer 7 zwischen zwei Chargen entfällt. Um das Auswechseln des Schüttbettfilters 16 zu ermöglichen, weist auch die zweite Filterkammer 7 einen zweiten Ablauf 18 auf. Alternativ zu der in der einzigen Figur dargestellten Ausführung der Heizung 17 kann diese beispielsweise auch als in die Schmelze eintauchen Stabheizung ausgeführt sein, die vorzugsweise unterhalb des Schüttbettfilters anzuordnen ist.

Im Betrieb der in der einzigen Figur dargestellten erfindungsgemäßen Vorrichtung zur Filtration von und Zugabe von Kornfeinungsmitteln zu Metallschmelzen, insbesondere Aluminiumschmelzen, erfolgt in der ersten Filterkammer 5 eine erste Filtration der Aluminiumschmelze mit einer Effektivität zwischen 80 und 95 %, die im wesentlichen durch die oben bereits beschriebene Brückenbildung in den Poren des keramischen Schaumfilters gewährleistet wird. Diese Brückenbildung wird im Stand der Technik dadurch behindert, daß das Kornfeinungsmaterial der Aluminiumschmelze vor dem ersten Filter zugeführt wird. Es hat sich gezeigt, daß in diesem Fall keine Brückenbildung innerhalb der Poren des keramischen Schaumfilters stattfindet. Nach der ersten Filterung gelangt die Aluminiumschmelze in die Zugabekammer 6, in der definiert ein Kornfeinungsmaterial in Lösung gebracht wird. Die in dem Kornfeinungsmaterial enthaltenen unerwünschten ungelösten Verunreinigungen werden anschließend in einem relativ kleinen Schüttbettfilter 16 in einer zweiten Filterkammer 7 weitestgehend entfernt. Im Ergebnis steht im Auslaufbereich eine Aluminiumschmelze mit einem sehr geringen Anteil von ungelösten Verunreinigungen an, die im weiteren zu hochwertigen Gußprodukten, wie beispielsweise Barren, vergossen wird.

## Patentansprüche

1. Vorrichtung zur Filtration von und Zugabe von Kornfeinungsmaterialien zu Metallschmelzen mit einem ersten Filter (10) und einer Zuführung für ein Kornfeinungsmaterial, wobei der erste Filter ein poröses Filtermedium aufweist,
die Zuführung für das Kornfeinungsmaterial in Strömungsrichtung hinter dem ersten Filter (10) angeordnet ist, in Strömungsrichtung hinter der Zuführung für das Kornfeinungsmaterial ein zweiter Filter (16) angeordnet ist und der zweite Filter (16) ein poröses Filtermedium aufweist,
**dadurch gekennzeichnet, daß**
der zweite Filter (16) einen Tiefbettfilter aufweist.

2. Vorrichtung nach Anspruch 1,
**dadurch gekennzeichnet, daß** der erste Filter als ein auf einer Kuchenfiltration basierender Filter ausgebildet ist.

3. Vorrichtung nach Anspruch 2,
**dadurch gekennzeichnet, daß** der erste Filter (10) eine Platte (11) aus keramischem Schaum aufweist.

4. Vorrichtung nach Anspruch 3,
**dadurch gekennzeichnet, daß** die Platte (11) aus keramischem Schaum eine Dicke von 5 bis 30 mm - vorzugsweise 10 bis 15 mm - aufweist.

5. Vorrichtung nach einem der Ansprüche 2 bis 4,
**dadurch gekennzeichnet, daß** der erste Filter (10) zumindest ein Element aus gesintertem Material aufweist.

6. Vorrichtung nach einem der Ansprüche 2 bis 5,
**dadurch gekennzeichnet, daß** der erste Filter (10) zumindest ein Element aus einem über CVD abgeschiedenen Material aufweist.

7. Vorrichtung nach Anspruch 6,
**dadurch gekennzeichnet, daß** der Tiefbettfilter als Schüttbettfilter ausgebildet ist.

8. Vorrichtung nach einem der Ansprüche 1 bis 7,
**dadurch gekennzeichnet, daß** der erste Filter (10) und/oder der zweite Filter (16) beheizbar sind.

9. Verfahren zur Filtration von und Zugabe von Kornfeinungsmaterialien zu Metallschmelzen, bei welchem die Schmelze mit Hilfe eines ersten ein poröses Filtermedium aufweisenden Filters gefiltert wird und der Schmelze ein Kornfeinungsmaterial zugeführt wird zur Verwirklichung unter Verwendung einer Vorrichtung nach einem der Ansprüche 1 bis 10, wobei
das Kornfeinungsmaterial der Schmelze hinter dem ersten Filter zugeführt wird und daß die Schmelze in Strömungsrichtung hinter der Zuführung für das Kornfeinungsmaterial mit Hilfe eines Tiefbettfilters gefiltert wird.

## Claims

1. A device for the filtration of and addition of grain refining material to metal melts having a first filter (10) and a feed for a grain refining material, the first filter having a porous filter medium, the feed for the grain refining material being positioned in the flow direction after the first filter (10), a second filter (16) being positioned in the flow direction after the feed for the grain refining material, and the second filter (16) having a porous filter medium,
**characterized in that** the second filter (16) has a deep bed filter.

2. The device according to Claim 1,
**characterized in that** the first filter is implemented as a filter based on cake filtration.

3. The device according to Claim 2,
**characterized in that** the first filter (10) has a slab (11) made of ceramic foam.

4. The device according to Claim 3,
**characterized in that** the slab (11) made of ceramic foam has a thickness of 5 to 30 mm - preferably 10 to 15 mm.

5. The device according to one of Claims 2 to 4,
**characterized in that** the first filter (10) has at least one element made of sintered material.

6. The device according to one of Claims 2 to 5,
**characterized in that** the first filter (10) has at least one element made of material deposited via CVD.

7. The device according to Claim 6,
**characterized in that** the deep bed filter is implemented as a fluidized bed filter.

8. The device according to one of Claims 1 to 7,
**characterized in that** the first filter (10) and/or the second filter (16) may be heated.

9. A method for the filtration of and addition of grain refining material to metal melts, in which the melt is filtered with the aid of a first filter having a porous filter medium and a grain refining material is added to the melt, for implementation using a device according to one of Claims 1 to 10,
wherein the grain refining material is added to the melt after the first filter and the melt is filtered with the aid of a deep bed filter after the feed for the grain refining material in the flow direction.

## Revendications

1. Dispositif de filtration et d'addition de matériaux d'affinage de grain à des masses fondues métalliques, lequel dispositif comporte un premier filtre (10) et une amenée d'un matériau d'affinage de grain,
le premier filtre comportant un milieu filtrant poreux,
l'amenée de matériau d'affinage de grain étant disposée en arrière du premier filtre (10) en référence au sens d'écoulement,
un deuxième filtre (16) étant disposé en arrière de l'amenée de matériau d'affinage de grain en référence au sens d'écoulement et
le deuxième filtre (16) comportant un milieu filtrant poreux,
**caractérisé en ce que** le deuxième filtre (16) comporte un filtre à lit profond.

2. Dispositif selon la revendication 1, **caractérisé en ce que** le premier filtre est configuré sous la forme d'un filtre à filtration de gâteau.

3. Dispositif selon la revendication 2, **caractérisé en ce que** le premier filtre (10) comporte une plaque (11) en mousse de céramique.

4. Dispositif selon la revendication 3, **caractérisé en ce que** la plaque (11) en mousse de céramique a une épaisseur de 5 à 30 mm, de préférence de 10 à 15 mm.

5. Dispositif selon l'une des revendications 2 à 4, **caractérisé en ce que** le premier filtre (10) comporte au moins un élément en matériau fritté.

6. Dispositif selon l'une des revendications 2 à 5, **caractérisé en ce que** le premier filtre (10) comporte au moins un élément en matériau déposé par CVD.

7. Dispositif selon la revendication 6, **caractérisé en ce que** le filtre à lit profond est configuré sous la forme d'un filtre à lit basculant.

8. Dispositif selon l'une des revendications 1 à 7, **caractérisé en ce que** le premier filtre (10) et/ou le deuxième filtre (16) peuvent être chauffés.

9. Procédé de filtration et d'addition de matériaux d'affinage de grain à des masses fondues métalliques, dans lequel la masse fondue est filtrée à l'aide d'un premier filtre comportant un support de filtrage poreux et un matériau d'affinage de grain est amené vers la masse fondue en utilisant un dispositif selon l'une des revendications 1 à 10, le matériau d'affinage de grain étant amené vers la masse fondue en arrière du premier filtre, et la masse fondue étant filtrée à l'aide d'un filtre à lit profond en arrière de l'amenée du matériau d'affinage de grain en référence au sens écoulement.
